# EUROPEAN PATENT SPECIFICATION

(11) **EP 2 989 405 B1**
(45) Date of publication and mention of the grant of the patent: **07.11.2018**
(21) Application number: 14721013.2
(22) Date of filing: 18.03.2014
(51) Int. Cl.: F28D 20/00

(54) **PACKED ROCK BED THERMAL ENERGY STORAGE FACILITY**
WÄRMEENERGIESPEICHERANLAGE MIT VERPACKTEN GESTEINSSCHICHTEN
INSTALLATION DE STOCKAGE D'ÉNERGIE THERMIQUE À LIT DE ROCHES TASSÉES

(30) Priority: 26.04.2013 ZA 201303068
(43) Date of publication of application: 02.03.2016
(73) Proprietor: Stellenbosch University, Western Cape Province 7600 (ZA)
(72) Inventor: KRÖGER, Detlev, Gustav, deceased (ZA)
(74) Representative: HGF Limited
(86) International application number: PCT/IB2014/059918
(87) International publication number: WO 2014/174384

(56) References cited:
- US-A- 4 139 321
- US-A- 4 299 270
- US-A- 4 362 149
- US-A- 5 477 703

## Description

### FIELD OF THE INVENTION

This invention relates to a packed rock bed thermal storage facility for use in the storage of thermal energy that has been derived from some suitable source.

### BACKGROUND TO THE INVENTION

The generation of power from sources using conventional fossil fuels is increasingly being replaced by the use of renewable energy of one or other type. As far as the present patent application is concerned, the invention is especially appropriate for use in association with concentrating solar power plants or combined cycle power plants, although it is not limited to these applications.

The use of solar energy is associated with the need for storing the solar energy collected for use at a later time so that energy is available at night time or when the sun is obscured, typically by cloud. One practical way of storing energy is in the form of heat (thermal energy) that can be used subsequently for the generation of electricity, by way of a steam generating cycle and an associated turbine and generator.

Different thermal energy storage facilities have been proposed and are currently in use, at least to some extent. These include the storage of thermal energy in molten salts or alternatively, primarily as latent heat in the case of phase change materials. Although these are successful to a greater or lesser extent, there is considerable scope for improvement, particularly the reduction of cost.

Packed beds of ceramics have been used for thermal storage at high temperatures (> 500 °C), for example regenerators in glass factories and cowper stoves in iron smelters. The use of packed rock beds has, on the other hand, received considerable attention from a theoretical point of view but, as far as applicant is aware, has not been implemented to any appreciable extent at high temperatures in practice although it is understood that a large high-temperature rock storage facility is currently under construction in Morocco. The general lack of use is most likely due to the fact that existing proposals for packed rock bed storage facilities are relatively costly or impractical, or both. The proposals include the formation of a packed rock bed in excavations in the ground utilizing primarily the ground as an insulating medium.

US5477703 (Hanchar et al.) describes a geothermal cell and recovery system, in which an underground heat exchanger assembly is covered with an impermeable layer of plastic then crushed rock or gravel. The filled hole is then filled with liquid to increase heat transfer between the liquid and buried heat exchanger assembly. The preamble of claim 1 is based on this document.

US4362149 (Thomson) describes a having a heat collecting fluid in a heat-exchange relationship with a source of heat or thermal energy, a housing containing rocks for heat storage irrigated with a heat transfer gas. The gas exchanges heat with the heat collecting fluid, and the flow of the gas and fluid can be reversed so as to extract heat from the rocks, which can then be passed to a working fluid.

US4299270 (McGrath) describes a heat sink under a building, in which water is circulated through a shallow permeable layer near the surface, and into the earth. Heat is exchanged by conduction and recovered by pumping from a deep level and by thermal conduction or both.

US4139321 (Werner) describes a heat or cold storage system utilizing a plurality of channels dug directly into the earth and filled with rocks which are used to absorb heat or cold for storage. The system has conduits for carrying heat or cold to the rocks.

### SUMMARY OF THE INVENTION

In accordance with the invention there is provided a packed rock bed thermal energy storage facility comprising first and second spaces separated by a rock bed of individual rock units such that working fluid may flow between the first and second spaces by way of interstices between rock units forming the rock bed in order to provide for the transfer of heat to or from the rock bed, in use, and at least one communication duct associated with each of the first and second spaces for a working fluid to flow into or out of the first and second spaces, the energy storage facility being characterised in that the rock bed is in the form of a pile of rocks with the first space being formed between an upper surface of the pile and an enclosure spaced upwardly from the upper surface of the pile, and the second space is formed generally towards the bottom of the pile of rocks with the second enclosed space being defined by a surface of an inner chamber in the form of one or more passages or tunnels defined by a part of a bottom surface of the rock pile and a part of a floor of the enclosure and wherein the bottom surface of the rock pile includes a support grid and larger rocks or larger rocks only to support the rocks of the packed bed and maintain the second space. The enclosure has a roof, walls and a floor.
Further features of the invention provide for the enclosure to have a roof that is preferably thermally insulated, walls and a floor; for the floor to have a lower central region and somewhat inclined side and end regions extending upwards at a gentle slope towards low sidewalls that support the roof, or end walls; for the first enclosed space to be defined by an upper surface of the rock pile and the roof; and for one or both of the first and second spaces to have associated with it at least two or more communication ducts that may be used selectively for a thermal energy absorption process and a thermal energy usage process. Still further features of the invention provide for the rock bed to consist of rocks selected from rock types such as (although not limited to) granite, dolerite, gneiss and hornfels; for the rocks to be generally similar in size and, preferably from 10 to 50 mm in size; for the rocks to be either rounded or crushed; and for the rock pile to have a flat top and sides that slope downwards at a natural angle of repose. The rock pile height will typically be between 1 - 15 m.

The angle of repose can range between 20 - 50 °. For most crushed rock it is usually 30 - 40 °, although it can vary depending on the particle characteristics.

The size of the facility depends entirely upon the desired capacity (energy stored and maximum thermal power output) and the available source of thermal energy to charge the bed.

The facility could cover an area as small as a few square metres, or several thousand square metres or more. When the size is such that further scaling-up increases the cost non-linearly due to the requirements of the containment structure, a number of smaller beds may be constructed instead of a single large bed. In this way, if desired, a thermal power output of thousands of megawatts may be achieved, for thermal capacities of thousands of megawatt-hours.

In order that the above and other features of the invention may be more fully understood various proposed embodiments of the invention will now be described with reference to the accompanying drawings.

### BRIEF DESCRIPTION OF THE DRAWINGS

In the drawings:-
- Figure 1: is a schematic cross-sectional elevation of a first embodiment of thermal energy storage facility in accordance with this invention.
- Figure 2: is a schematic longitudinal sectional elevation of the embodiment of the invention illustrated in Figure 1;
- Figure 3: is a schematic cross-sectional elevation of a second but larger embodiment of thermal energy storage facility according to the invention;
- Figure 4: is a schematic longitudinal sectional elevation of the embodiment of the invention illustrated in Figure 3;
- Figure 5: is a schematic cross-sectional elevation of a third embodiment of thermal energy storage facility according to the invention;
- Figure 6: is a schematic sectional plan view taken approximately along the line VI - VI in Figure 5;
- Figure 7: is a schematic sectional plan view similar to Figure 6 but showing a variation in the arrangement of and,
- Figure 8: is a schematic diagram illustrating one arrangement in which a thermal energy storage facility of the invention can be employed.

### DETAILED DESCRIPTION WITH REFERENCE TO THE DRAWINGS

Referring now to the drawings, one embodiment of packed rock bed thermal energy storage facility (1) comprises a pile (2) of individual rock units and first and second spaces, (3) and (4) respectively, separated by the rock bed such that working fluid may flow between the first and second spaces by way of interstices between rock units forming the rock bed. In so doing, heat may be either transferred from the working fluid to the rock bed in order to store heat in the rock bed or can be transferred from the rock bed to a working fluid to recover heat stored in the rock bed by absorbing it into the working fluid, as the case may be.

The first space (3) is formed between an upper surface (5) of the pile of rocks and an arched roof (6) of an enclosure spaced upwardly from the upper surface of the pile. The entire upper surface of the pile is thus exposed to the first space. In this embodiment of the invention, the rock pile has a flat top and surrounding sides and an end that slopes downwards at a natural angle of repose of the rock units.

The roof is thermally insulated by means of a suitable insulation layer (7). The enclosure also has low side walls (8) along each side thereof that support the arched roof. A floor has a central flat lower region (11) and side regions (12) that are inclined upwardly at a gentle slope towards the low sidewalls that support the roof, and towards end walls (13).

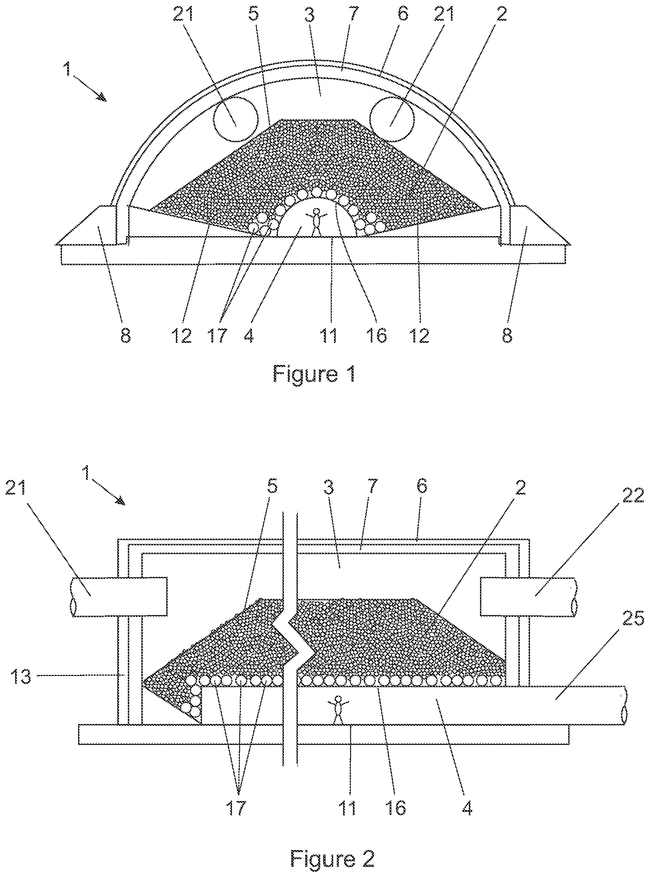

The packed rock bed storage facility, in this embodiment of the invention, is of elongated generally rectangular shape with an arched shape in cross-section, as shown schematically most clearly in Figure 1. The longitudinal section of the facility is illustrated schematically in Figure 2.

The second space (4) in this embodiment of the invention is formed generally at the bottom of the pile of rocks by an inner chamber that is in the form of a passage or tunnel defined by a part of a floor of the enclosure and a support grid (16) supporting larger rocks (17) to retain the smaller rocks of the packed rock bed and maintain the second space.

The first space (3) has associated with it two communication ducts (21, 22) that may be used selectively. In this embodiment of the invention one communication duct (21) serves as an inlet for hot air for the purpose of heating the rock bed in a thermal energy absorption process. Depending on the application, communication duct (21) or (22) serves the purpose of an outlet for heated air flowing in a reverse direction through the rock bed during a thermal energy recovery cycle.

The second space (4) has a single communication duct (25) for conducting air out of the facility once it has passed through the rock bed during a thermal energy absorption process cycle or into the facility during a thermal energy recovery cycle.

As air flow requires large cross-sectional communication ducts and thermal losses from ductwork can be significant, even if insulated, the communication ducts carrying the air are as short as possible.

Natural convection can have a significant influence on packed rock beds. The rock bed is therefore charged by introducing the hotter air at the top of the rock bed and the cooler air is removed at the bottom thereof. Similarly, cooler air is introduced at the bottom of the rock bed and heated air is removed at the top during a thermal energy recovery cycle of heat stored in the rock bed. This at least partially prevents natural convection from causing de-stratification.

It should be noted that the top surface of the rock bed is unimpeded so that it can expand and contract as it is heated and cooled. The inclined unimpeded sides of the rock bed should prevent stress on the containment structure caused by ratcheting, a process where the particles expand and contract with heating and cooling, thereby packing together more tightly and exerting a force on the container.

During heating of the packed rock bed, hot air or combustion gases enter the space above the bed via the communication duct before they flow uniformly through the bed. As the gasses flow through the bed they are cooled before they exit the storage facility via the communication duct from the second space. During recovery of the stored heat from the bed, the flow is reversed, with cold air entering the bed via the communication duct from the second space to flow uniformly through the hot packed bed and exit above the bed into the first space and to exit in this instance through the communication duct (21 or 22).

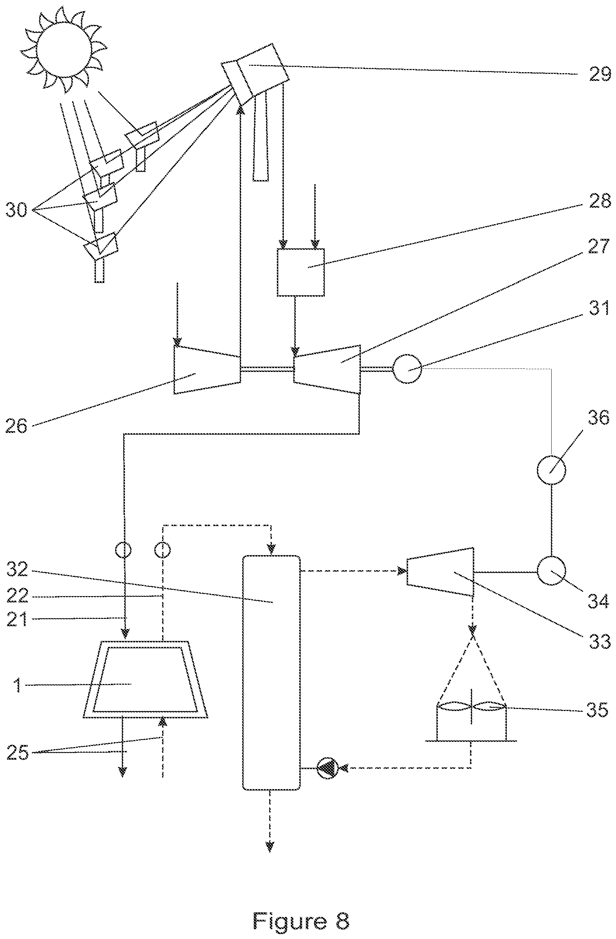

A thermal energy storage facility according to the invention may be used in many different situations. The circuit of Figure 8 is given to illustrate one practical application of the invention. In that instance the circuit may include a compressor (26) for supplying air to a central solar receiver (29) in a heliostat field (30). The compressor is driven by a first turbine (27) driven by the output from a combustor (28) in turn fed with heated air from the central solar receiver. Gases entering the first turbine drive a first generator (31) that generates electrical energy. The exhaust gas from the turbine at a temperature of about 500°C or more is passed through the packed bed of rock described above to elevate the temperature of the rock and store thermal energy therein.

In order to recover the stored heat from the packed bed of rock, ambient air is passed through the packed bed in the opposite direction so that it enters the second space by way of the communication duct (25), passes through the heated packed rock bed, and thence to a boiler (32) of a Rankine cycle that includes a second turbine (33) driving a second electrical generator (34). The spent steam can be passed through a condenser (35) that could be of either a dry or hybrid type and the condensate can be recycled to the boiler. Both the first and second electrical generators (31) and (34) may feed electrical energy into a grid (36).

The rock used for thermal storage should not crumble and thereby tend to block air passages in the packed bed and increase the required pumping power. It should not decompose chemically or disintegrate at the maximum storage temperature, and it must withstand thermal cycling fatigue. Igneous rocks or metamorphic rocks formed at temperatures higher than the intended storage temperature should not decompose when heated, whereas sedimentary rock might contain compounds that thermally decompose, and will be more likely to be unsuitable.

A thermal storage facility according to this invention may thus consist of a packed bed in the form of a pile of well-rounded or crushed rock in a bed operating at high temperatures (≥ 500 °C). Since the cost of rock material is relatively low it can be readily replaced after some years if problems should arise. For the rock to be effective (have a relatively uniform temperature distribution within each unit), the Biot number based on the effective rock diameter should preferably be *Bi* = *hdᵣ*/(*2kᵣ*) ≤ 0.1 - 0.2, where h is the air-side heat transfer coefficient, *dᵣ* is the effective rock diameter and *kᵣ* is the thermal conductivity of the rock.

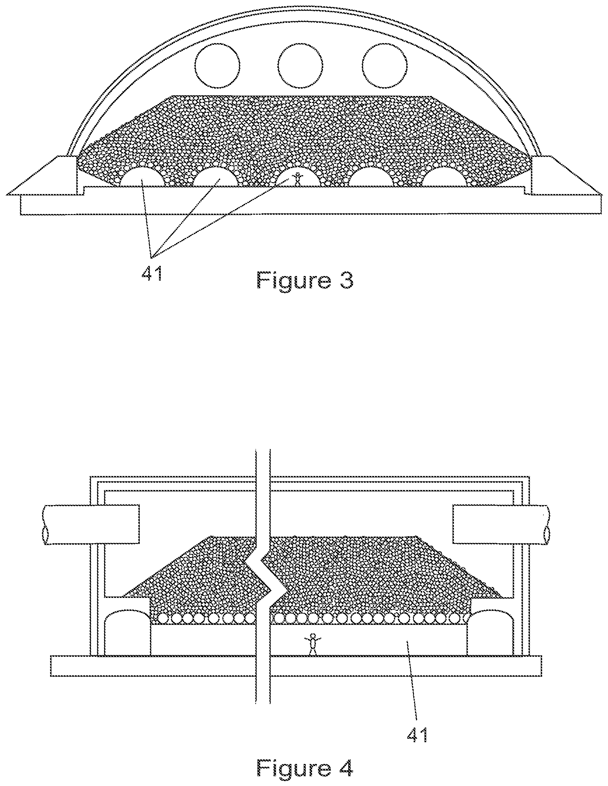

Numerous variations may be made to the embodiment of the invention described above without departing from the script hereof. Simply by way of example, Figures 3 and 4 illustrate an arrangement that could be used for a much larger thermal energy storage facility and in this instance the facility is arranged very much as described above except for the fact that the second space is defined by multiple parallel tunnels (41) extending along the length of the facility.

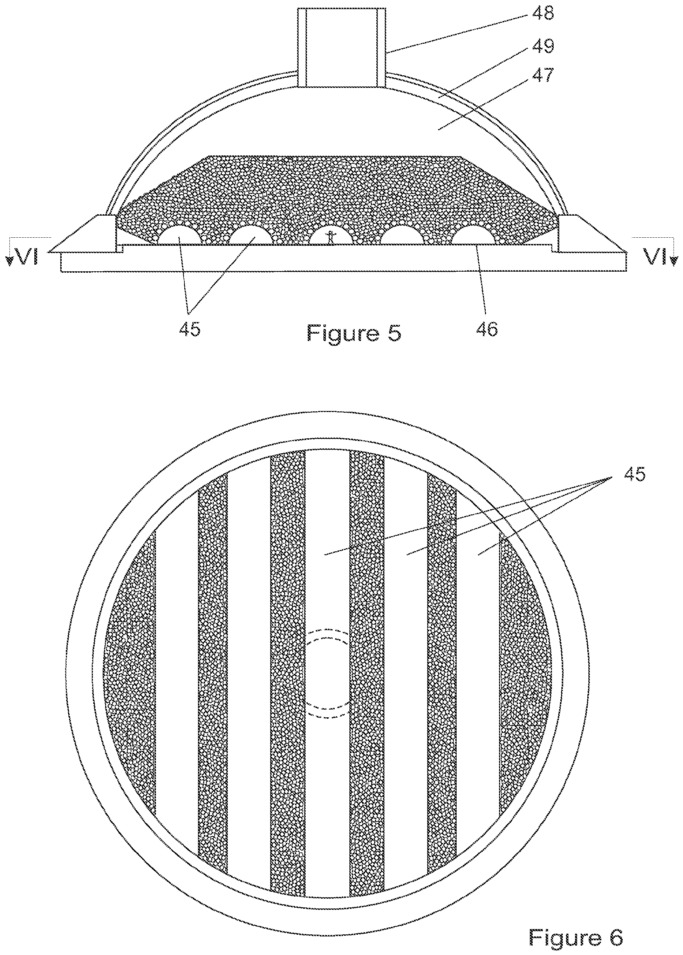

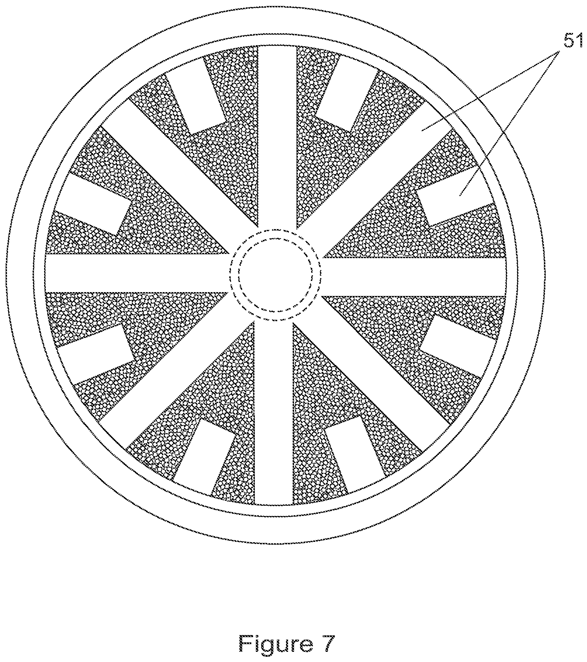

Of course the packed rock bed could be circular in plan view as in the instance of the embodiment of the invention illustrated in Figures 5 and 6. In that instance the second space may be defined by a number of parallel tunnels (45) that extend on the floor (46) of the rock bed in the direction of a diameter thereof. As an alternative, and is illustrated in Figure 7, the tunnels that form the second space may extend radially from a centre of the floor (51) of the rock bed. In either event, the first space (47), as shown in Figure 5, could be a single duct (48) extending from the top of a dome shaped roof (49).

The rock bed material of this invention is constrained such that it is free to expand and contract with changing temperatures without creating significant stress and corresponding movement that may lead to deformation of the bed and containment, or erosion and breaking of the rock. The larger rock surrounding air passages prevents clogging; it may also be possible to construct self-supporting ducts by means of larger rock.

Numerous other variations may be made especially to the construction of the facility.

## Claims

1. A packed rock bed thermal energy storage facility (1) comprising first and second spaces (3, 4) separated by a rock bed (2) of individual rock units such that working fluid may flow between the first and second spaces (3, 4) by way of interstices between rock units forming the rock bed (2) in order to provide for the transfer of heat to or from the rock bed (2), in use, and at least one communication duct (21, 22, 25) associated with each of the first and second spaces for a working fluid to flow into or out of the first and second spaces, the energy storage facility being **characterized in that** the rock bed (2) is in the form of a pile (2) of rocks with the first space (3) being formed between an upper surface (5) of the pile and an enclosure having a roof (6), walls (8, 13) and a floor (11, 12) and being spaced upwardly from the upper surface of the pile (2), and the second space (4) is formed generally towards the bottom of the pile (2) of rocks with the second enclosed space (4) being defined by a surface of an inner chamber in the form of one or more passages or tunnels defined by a part of a bottom surface of the rock pile (2) and a part of a floor (11, 12) of the enclosure and wherein the bottom surface of the rock pile includes a support grid (16) and larger rocks (17) or larger rocks only to support the rocks of the packed bed and maintain the second space.

2. A packed rock bed thermal energy storage facility (1) as claimed in claim 1 in which the floor (11, 12) has a lower central region (11) and somewhat inclined side and end regions (12) extending upwards at a gentle slope towards low sidewalls (13) that support the roof (6), or towards end walls (6).

3. A packed rock bed thermal energy storage facility (1) as claimed in either one of claims 1 or 2 in which the first enclosed space (3) is defined by an upper surface (5) of the rock pile (2) and the roof (6).

4. A packed rock bed thermal energy storage facility (1) as claimed in any one of the preceding claims in which one or both of the first and second spaces (3, 4) have associated therewith at least two or more communication ducts (21, 22, 25) that may be used selectively for a thermal energy absorption process and a thermal energy usage process.

5. A packed rock bed thermal energy storage facility (1) as claimed in any one of the preceding claims in which the rock bed (2) consists of rocks selected from rock types being granite, dolerite, gneiss and hornfels.

6. A packed rock bed thermal energy storage facility (1) as claimed in any one of the preceding claims in which the rocks are of generally similar size and within the range of from 10 to 50 mm in size.

7. A packed rock bed thermal energy storage facility (1) as claimed in any one of the preceding claims in which the rocks are either rounded or crushed.

8. A packed rock bed thermal energy storage facility (1) as claimed in any one of the preceding claims in which the rock pile (2) has a flat top and sides that slope downwards at a natural angle of repose.

## Patentansprüche

1. Anlage zur Wärmeenergiespeicherung mittels komprimiertem Steinebett (1), umfassend ersten und zweiten Raum (3, 4), die durch ein Steinebett (2) aus einzelnen Steineinheiten derart getrennt sind, dass Arbeitsfluid zwischen dem ersten und zweiten Raum (3, 4) im Wege von kleinen Zwischenräumen zwischen das Steinebett (2) bildenden Steineinheiten fließen kann, um für die Übertragung von Wärme zu oder von dem Steinebett (2), bei Benutzung, zu sorgen, und mindestens ein Verbindungsrohr (21, 22, 25), das mit jedem des ersten und zweiten Raumes für ein Arbeitsfluid verbunden ist, um in den oder aus dem ersten und zweiten Raum zu fließen, wobei die Anlage zur Energiespeicherung **dadurch gekennzeichnet ist, dass** das Steinebett (2) in der Form eines Haufens (2) Steine ist, wobei der erste Raum (3) zwischen einer oberen Oberfläche (5) des Haufens und einer Umschließung aufweisend ein Dach (6), Wände (8, 13) und einen Boden (11, 12) gebildet ist und nach oben von der oberen Oberfläche des Haufens (2) beabstandet ist, und der zweite Raum (4) im Allgemeinen zum Boden des Haufens (2) Steine hin gebildet ist, wobei der zweite umschlossene Raum (4) durch eine Oberfläche einer Innenkammer in der Form von einem oder mehreren Durchgängen oder Tunneln definiert ist, die durch einen Teil der unteren Oberfläche des Steinehaufens (2) und einem Teil eines Bodens (11, 12) der Umschließung definiert sind, und wobei die untere Oberfläche des Steinehaufens ein Abstützrost (16) und größere Steine (17) oder nur größere Steine umfasst, um die Steine des komprimierten Bettes abzustützen und den zweiten Raum zu halten.

2. Anlage zur Wärmeenergiespeicherung mittels komprimiertem Steinebett (1) nach Anspruch 1, in welcher der Boden (11, 12) einen unteren zentralen Bereich (11) und etwas geneigte Seiten- und Endbereiche (12), die sich nach oben bei einer sanften Neigung zu niedrigen Seitenwänden (13) hin, die das Dach (6) abstützen, oder zu Endwänden (6) hin erstrecken, aufweist.

3. Anlage zur Wärmeenergiespeicherung mittels komprimiertem Steinebett (1) nach einem der Ansprüche 1 oder 2, in welcher der erste umschlossene Raum (3) durch eine obere Oberfläche (5) des Steinehaufens (2) und das Dach (6) definiert ist.

4. Anlage zur Wärmeenergiespeicherung mittels komprimiertem Steinebett (1) nach einem der vorhergehenden Ansprüche, in welcher einer oder beide des ersten und zweiten Raumes (3, 4) mindestens zwei oder mehr Verbindungsrohre (21, 22, 25) damit verbunden aufweist, die selektiv für einen Wärmeenergieaufnahmeprozess und einem Wärmeenergieverwendungsprozess verwendet werden können.

5. Anlage zur Wärmeenergiespeicherung mittels komprimiertem Steinebett (1) nach einem der vorhergehenden Ansprüche, in welcher das Steinebett (2) aus Steinen besteht, die aus Steinearten ausgewählt sind, die Granit, Dolerit, Gneis und Hornfels sind.

6. Anlage zur Wärmeenergiespeicherung mittels komprimiertem Steinebett (1) nach einem der vorhergehenden Ansprüche, in welcher die Steine von im Allgemeinen ähnlicher Größe und im Bereich von 10 bis 50 mm groß sind.

7. Anlage zur Wärmeenergiespeicherung mittels komprimiertem Steinebett (1) nach einem der vorhergehenden Ansprüche, in welcher die Steine entweder gerundet oder gebrochen sind.

8. Anlage zur Wärmeenergiespeicherung mittels komprimiertem Steinebett (1) nach einem der vorhergehenden Ansprüche, in welcher der Steinehaufen (2) eine flache Oberseite und Seiten, die nach unten in einem natürlichen Schüttwinkel abfallen, aufweist.

## Revendications

1. Infrastructure de stockage d'énergie thermique sur lit de roches fixe (1) comprenant des premier et deuxième espaces (3, 4) séparés par un lit de roches (2) d'unités de roches individuelles de manière à ce qu'un fluide actif puisse s'écouler entre les premier et deuxième espaces (3, 4) par le biais d'interstices entre des unités de roches formant le lit de roches (2) afin de permettre le transfert de chaleur à ou depuis le lit de roches (2), en utilisation, et au moins un conduit de communication (21, 22, 25) associé à chacun des premier et deuxième espaces pour l'admission ou l'évacuation d'un fluide actif dans ou hors des premier et deuxième espaces, l'infrastructure de stockage d'énergie étant **caractérisée en ce que** le lit de roches (2) a la forme d'un empilement (2) de roches avec le premier espace (3) étant formé entre une surface supérieure (5) de l'empilement et une enceinte ayant un toit (6), des parois (8, 13) et un sol (11, 12) et étant espacé vers le haut depuis la surface supérieure de l'empilement (2), et le deuxième espace (4) est formé globalement vers le bas de l'empilement (2) de roches avec le deuxième espace clos (4) étant défini par une surface d'une chambre interne sous forme d'un ou plusieurs passages ou tunnels définis par une partie d'une surface inférieure de l'empilement de roches (2) et une partie de sol (11, 12) de l'enceinte et dans laquelle la surface inférieure de l'empilement de roches inclut une grille support (16) et des roches plus grandes (17) ou des roches plus larges uniquement pour supporter les roches du lit fixe et maintenir le deuxième espace.

2. Infrastructure de stockage d'énergie thermique sur lit de roches fixe (1) selon la revendication 1, dans laquelle le sol (11, 12) a une zone centrale plus basse (11) et des zones latérales et d'extrémité légèrement inclinées (12) s'étendant vers le haut en pente douce vers des parois latérales basses (13) qui supportent le toit (6), ou vers des parois d'extrémité (6).

3. Infrastructure de stockage d'énergie thermique sur lit de roches fixe (1) selon l'une quelconque des revendications 1 ou 2, dans laquelle le premier espace clos (3) est défini par une surface supérieure (5) de l'empilement de roches (2) et le toit (6).

4. Infrastructure de stockage d'énergie thermique sur lit de roches fixe (1) selon l'une quelconque des revendications précédentes, dans laquelle l'un ou l'un et l'autre des premier et deuxième espaces (3, 4) ont au moins deux conduits de communication ou plus (21, 22, 25) qui leur sont associés et qui peuvent être utilisés sélectivement pour un processus d'absorption d'énergie thermique et un processus d'utilisation d'énergie thermique.

5. Infrastructure de stockage d'énergie thermique sur lit de roches fixe (1) selon l'une quelconque des revendications précédentes, dans laquelle le lit de roches (2) est constitué de roches sélectionnées parmi des types de roche étant le granit, la dolérite, le gneiss et la cornéenne.

6. Infrastructure de stockage d'énergie thermique sur lit de roches fixe (1) selon l'une quelconque des revendications précédentes, dans laquelle les roches sont globalement de taille similaire et de taille située dans la plage de 10 à 50 mm.

7. Infrastructure de stockage d'énergie thermique sur lit de roches fixe (1) selon l'une quelconque des revendications précédentes, dans laquelle les roches sont soit arrondies soit broyées.

8. Infrastructure de stockage d'énergie thermique sur lit de roches fixe (1) selon l'une quelconque des revendications précédentes, dans laquelle l'empilement de roches (2) a un sommet plat et des côtés qui sont en pente vers le bas en angle de talus naturel.
